(19) Europäisches Patentamt / European Patent Office / Office européen des brevets

(11) **EP 3 748 285 A1**

(12) **EUROPEAN PATENT APPLICATION**

(43) Date of publication:
**09.12.2020 Bulletin 2020/50**

(21) Application number: **19178684.7**

(22) Date of filing: **06.06.2019**

(51) Int Cl.:
**G01B 11/10** *(2006.01)*    **D01H 13/32** *(2006.01)*
**B65H 63/06** *(2006.01)*    **G01N 21/89** *(2006.01)*
**G01N 21/952** *(2006.01)*    **G01N 33/36** *(2006.01)*
**G01B 11/24** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Gebrüder Loepfe AG**
**8623 Wetzikon (CH)**

(72) Inventor: **Schlatter, Adrian**
**8046 Zürich (CH)**

(74) Representative: **Sutter, Kurt**
**E. Blum & Co. AG**
**Vorderberg 11**
**8044 Zürich (CH)**

(54) **OPTICAL SENSOR FOR MEASURING A PROPERTY OF AN ELONGATE TEXTILE BODY WITH REDUCED SENSITIVITY TO ENVIRONMENTAL LIGHT**

(57)    A sensor for measuring a property, such as the diameter, of a yarn or another elongate body (10), has a measuring region (12) for receiving the body (10). It further has a first transparent element (14a) acting as a collimator (36) for collimating the light from a light source (22) into the measuring region (12) as well as a second transparent element (14b) acting as a light collector for deflecting the light after the measuring region (12) onto a primary light detector (24). A secondary light detector (25) at the first transparent element (14a) is used to monitor the intensity of the light source (24). Each transparent element (14a, 14b) has two transparent surfaces (28a, 28b; 41a, 41b), with a first one (28a, 41a) facing the measuring region (12) and a second one facing one of the light detectors (24, 25). In order to reduce the amount of environmental light arriving at the light detectors, the first and second transparent surfaces (28a, 28b; 41a, 41b) are arranged transversally to each other, in particular under such an angle that total internal reflection prevents light coming from measuring region (12) from directly arriving at one of the light detectors (24, 25).

Fig. 2

EP 3 748 285 A1

**Description**

Technical Field

The invention relates to a sensor for measuring at least one property of an elongate body, in particular an elongate textile body, such as a yarn.

Background Art

This type of sensor can e.g. be used for measuring the diameter of a yarn, wire, or fiber. The elongate body is guided through a measuring region. A light source is provided at one side of this region. It generates a light field in the measuring region. The sensor further comprises at least one light detector that e.g. can be used for measuring light transmitted through the measurement region or reflected from the elongate body.
A measurement in transmission can e.g. be used for measuring the diameter of the body while a measurement in reflection can e.g. be used for measuring contaminations in the body.
Sensors of this type are described in EP 1808690, US 2006/0164646, US 2006/0098201, and WO 93/13407.
They typically have a measuring slit for receiving the elongate textile body. Since this slit is open at one lateral side, environmental light may enter it. Care must be taken to prevent said light from reaching the light detector.

Disclosure of the Invention

The problem to be solved by the present invention is to provide a sensor for measuring at least one property of an elongate body, in particular an elongate textile body, where environmental light entering the slit is unlikely to arrive at the light detector.
This problem is solved by the sensor of claim 1.
Accordingly, the sensor comprises at least the following elements:

- A measuring slit: The measuring region is arranged in this slit and the elongate body can be introduced in this slit from a lateral side.
- A light source: The light source is positioned to generate the light field in the measuring region.
- A light detector: The light detector can e.g. be positioned to measure light transmitted through the measuring region, light reflected from the body in the measurement region, or light from the light source that has not passed the measurement region.
- At least one transparent element: This element has at least the following two surfaces:

    a) A first transparent surface bordering the slit and forming at least part of a lateral wall of the slit. This surface is positioned such that the light field transverses said first transparent surface, i.e. it enters and/or leaves the measurement region through the first transparent surface.
    b) A second transparent surface facing the light detector: The light detector is positioned to receive light through the second transparent surface.

According to the invention, the first transparent surface extends transversally to the second transparent surface. Hence, environmental light has to transverse one or both surfaces under a non-perpendicular angle, which reduces the amount of light that can arrive at the light detector.
Advantageously, the two transparent surfaces are arranged such that refraction and/or total internal reflection thereon prevents any light passing through the first surface from also passing through the second surface. This can be achieved when, for any straight line extending through the transparent element between a first point on the first surface and a second point on the second surface, at least one of the following conditions holds:

$$\beta 1 > \arcsin\left(\frac{n_2}{n_1}\right)$$

and/or

$$\beta 2 > \arcsin\left(\frac{n_3}{n_1}\right)$$

with

$\beta 1$ being an angle between said line and a surface normal (N1) at said first point,
$\beta 2$ being an angle between said line and a surface normal (N2) at said second point,
$n_1$ begin a refractive index of said transparent element (14a, 14b),
$n_2$ being a refractive index in said measuring region (12), and
$n_3$ being a refractive index on a side of said second surface that faces said light detector.

The above conditions can be fulfilled e.g. by choosing the angle between the surface normals N1, N2 such that the two cones described by above equations do not overlap.

As described in more detail below, this condition ensures that any light beam that might be refracted into the transparent element through the first surface and arrives at the second surface is subject to total internal reflection at the second surface.

Advantageously, an air gap is located between the second surface and the light detector, which reduces the amount of light passing the second surface in particular for light beams that are non-parallel to the surface normal of the second transparent surface. This is particularly advantageous when the above condition is to be fulfilled because, in that case, $n_3 = 1$, which simplifies achieving total internal reflection at the second transparent surface.

Advantageously, the transparent body further comprises a mirror surface extending transversally to the first and second surfaces. Such a mirror surface allows to reflect light either into or from the measuring region.

In one embodiment, this mirror surface and the light source are positioned such that light from the light source is reflected by the mirror surface, transverses the first transparent surface and generates the light field in the measurement region. In other words, the mirror surface is used to deflect the light from the light source towards the measuring region.

In another embodiment, this mirror surface and the measuring region are positioned such that light from the light field enters the transparent body through the first transparent surface and is reflected by the mirror surface onto the light detector. In other words, the mirror surface is used to deflect the light from the measuring region towards the light detector.

The measurement slit may be closed at three sides and open at three other sides. Advantageously:

- The measurement slit has a first lateral wall, a second lateral wall, and a bottom wall between the first and second walls, wherein the walls enclose the measurement slit from three sides; and
- The measurement slit is open at first, second, and third sides, wherein the first and the second sides extend transversally to the walls and are opposite to each other and the third side is opposite to the bottom wall.

This allows to align the elongate body, during measurement, such that it enters through one of the first and second sides and exits through the other. The third open side is used for removing and inserting the elongate body transversally to its longitudinal direction.

In one embodiment, the sensor comprising a first and a second transparent element as described above and a first and a second light detector as described above. The first light detector is arranged at the second side of the first transparent element and the second light detector is arranged at the second side of the second transparent element.

In particular, the light source may also be arranged at the second side of the first transparent element.

The invention also relates to the use of the sensor for measuring the diameter and/or contaminations of the elongate body.

Other advantageous embodiments are listed in the dependent claims as well as in the description below.

Brief Description of the Drawings

The invention will be better understood and objects other than those set forth above will become apparent from the following detailed description thereof. Such description refers to the annexed drawings, wherein:

Fig. 1 shows a view of a sensor for performing measurements on an elongate body,
Fig. 2 shows a sectional view through the sensor of Fig. 1 perpendicular to the longitudinal axis of the elongate body to be examined,
Fig. 3 is a sectional view along line III-III of Fig. 2,
Fig. 4 illustrates the effects of refraction and total internal reflection (TIR) at the surfaces of a transparent element, and
Fig. 5 illustrates the geometry for blocking light beams using refraction and TIR.

Modes for Carrying Out the Invention

*Definitions*

*Transparent* is understood to designate a *body* that is substantially transparent to the light of the light source in the sense that it absorbs or scatters no more than 20%, in particular no more than 10% of the light from the light source passing through it. A transparent *surface* is understood to designate a surface that is substantially transparent to the light of the light source in the sense that it reflects or scatters no more than 20%, in particular no more than 10% of the light from the light source passing through it

A *transparent element* is a solid, transparent body.

The *measuring region* designates the region where the elongate body is located. Since, in operation, the body's position is not stationary but fluctuates, the width and height of the measurement region (in directions perpendicular to the longitudinal axis of the body) are non-zero and given by the statistical distribution of the body's location. For yarn, the width and height may e.g. be 3 - 4 mm. Advantageously, the measuring region corresponds to the region where the elongated body is, in operation, at least in 90% of the time, in particular at least 99% of the time.

*Device Example*

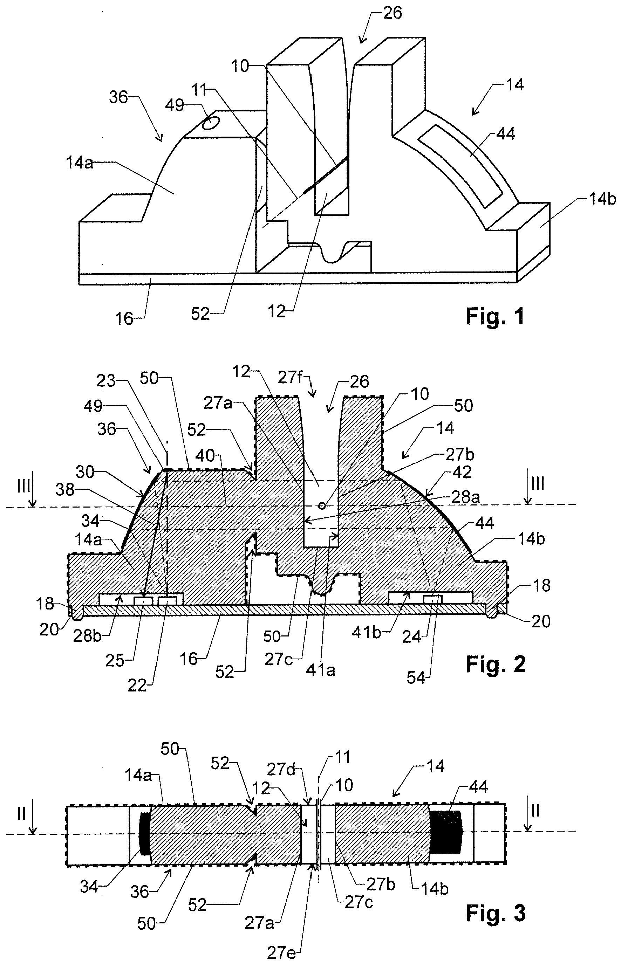

Figs. 1 - 3 show an embodiment of an optical sensor for measuring a property of an elongate object 10 aligned along a longitudinal direction 11 and located in a measuring region 12. In the present example, object 10 is a yarn.

The sensor comprises a transparent body 14 forming a first and a second transparent element 14a, 14b. In the shown embodiment, the two elements 14a, 14b are integrally connected to each other, thereby ensuring a stable, well-defined mutual alignment.

Body 14 can e.g. be cast or molded from a transparent plastic material.

A carrier plate 16 is located adjacent to body 14. It can e.g. be a printed circuit board.

Advantageously, body 14 is mechanically connected to carrier plate 16 in direct manner to ensure accurate mutual alignment. In the illustrated embodiment, projections 18 of body 14 extend through openings 20 of carrier plate 16 with no mechanical clearance between them, thus mutually aligning the two parts.

A light source 22 is arranged on carrier plate 16 adjacent to first element 14a, and a primary light detector 24 is arranged on carrier plate 16 adjacent to second element 14b.

Further, a secondary light detector 25 is arranged on carrier plate 16 adjacent to first element 14a.

Body 14 forms a measurement slit 26 for receiving elongate body 10. Measurement slit 26 has a first lateral wall 27a and a second lateral wall 27b as well as a bottom wall 27c between them. These walls enclose slit 26 from three sides.

Measurement slit 26 is open at a first and a second side 27d and at a second side 27e (cf. Fig. 3), with first and second side 27d, 27e being transversally, in particular perpendicular, to longitudinal direction 11.

Further, measurement slit 26 may be open at a third side 27f (Fig. 2), parallel to longitudinal direction 11, for inserting elongate body 10 into measuring region 12.

First transparent element 14a has a first transparent surface 28a and a second transparent surface 28b and a mirror surface 30.

Light source 22 is a divergent, anisotropic light source, in particular a LED. It has a main emission direction 23, which is advantageously perpendicular to carrier plate 16 for easy and defined mounting.

Light source 22 is positioned such that light from it enters first transparent element 14a through second transparent surface 28b, is reflected at mirror surface 30, and exits first transparent element 14a through first transparent surface 28a. First transparent surface 28a borders measuring region 12 and forms at least part of its first wall 27a.

First and second transparent surface 28a, 28b are transversal to each other. If they are flat, the angle between them is at least 70°, in particular at least 80°, in particular approximately 90°.

Mirror surface 30 is advantageously coated with a reflective layer (e.g. of metal) for increasing its optical reflectivity. It forms an advantageously curved collimation mirror 34.

First transparent element 14a forms a collimator 36. It converts the divergent light field emitted by light source 22 into a substantially parallel light field to be sent through measuring region 12.

Second transparent element 14b forms a light collector for collecting the light emerging from measuring region 12 and sending it to light detector 24.

Second transparent element 14b again has a first transparent surface 41a and a second transparent surface 41b as well as a mirror surface 42. First transparent surface 41a borders measuring region 12 and forms at least part of second wall 27b.

Mirror surface 42 is advantageously coated with a reflective layer (e.g. of metal) for increasing its optical reflectivity. It forms an advantageously curved detector mirror 44 for deflecting the light from measuring region 12 to detector 24.

Measuring region 12 is located between first transparent surface 28a of first transparent element 14a and first transparent surface 41a of second transparent element 14b.

Advantageously, first transparent surface 28a of first transparent element 14a is parallel, in particular within +/- 10°, to first transparent surface 41a of second transparent element 14b at least where they border measuring region 12. This may e.g. prevent multiple oblique reflections between the two first surfaces.

For the same reason, the light from light source 22 transverses the first transparent surfaces along a direction that is, within +/- 10° perpendicular to the first transparent surfaces 28a, 41a.

Second transparent surface 28b of first transparent element 14a is advantageously parallel, in particular within +/- 10°, to second transparent surface 41b of second transparent element 14b, which allows them to form a common mechanical interface against carrier plate 16. Advantageously, second transparent surface 28b of first transparent element 14a is coplanar (i.e. in a common plane) with second transparent surface 41b of second transparent element 14b, in particular within an accuracy of +/- 2 mm or better.

Both light detectors are positioned to receive light from light source 22.

Primary light detector 24 is arranged at second transparent surface 41b of second transparent element 14b. Mirror surface 42 and primary light detector 24 are positioned such that the light field from measuring region 12 enters second transparent element 14b through its first transparent surface 41a and is reflected by mirror surface 42 onto primary light detector 24.

Secondary light detector 25 is arranged at second transparent surface 28b of first transparent element 14a. It is positioned to receive part of the light from light source 22 reflected from first transparent element 14a. In the shown embodiment, this is supported by an auxiliary mirror 49 e.g. mounted to a surface of first transparent element 14a (e.g. as a coating), which receives part of the light from light source 22 and reflects towards secondary light detector 25.

In operation, elongate body 10 is run along longitudinal direction 11 through the measuring region. It is illuminated by light from light source 22, and the light transmitted through measuring region is measured by primary light detector 24. Variations in thickness of elongate object 10 will change the amount of transmitted light. They can be detected in the signal of light detector 24.

In addition, part of the light from light source 22 is reflected into secondary light detector 25. The signal from secondary light detector 25 may e.g. be used to control the current through light source 22 in order to keep its brightness constant. Alternatively or in addition thereto, the signal from secondary light detector may be used to correct the signal from primary light detector 24, e.g. by calculating the ratio between the signals from the two light detectors 24, 25, thereby compensating fluctuations in the light emission of light source 22.

*Environmental light*

As mentioned, environmental light may affect the measurement if it falls on one or both of the light detectors 24, 25.

The sensor shown here combines various measures to reduce the influence of environmental light on the signals from the light detectors 24, 25.

As one measure, transparent body 14 and in particular both transparent elements 14a, 14b comprise surface coating 50. Advantageously, the absorbing surface coating absorbs or reflects light of the wavelength(s) of sensitivity of the detector(s) in such a manner than no more than 5%, in particular no more than 1%, is able to pass through it.

In addition or alternatively thereto, coating 50 advantageously absorbs at least 90% of the light impinging from inside a transparent element 14a, 14b onto an inner surface of said transparent element 14a, 14b, thus reducing undesired internal reflections.

Advantageously, absorbing coating 50 coats substantially all the surface of a transparent element 14a, 14b with the following exceptions:

- the first and second transparent surfaces 28a, 28b, 41a, 41b where light is exchanged with measuring region 12 or where the light enters from light source 22 or where the light needs to be transmitted to one of the light detectors 24, 25 should not be covered by absorbing coating 50;
- the mirror surfaces 30, 42 and auxiliary mirror 49: Here, absorbing coating 50 must not extend between the mirrors 34, 44 and the transparent elements 14a, 14b. Absorbing coating 50 may be omitted at these locations, or it may cover the mirrors from the outside;
- locations where the transparent element 14a, 14b abuts against other non-transparent structures, such as carrier 16, may or may not be covered by absorbing coating 50.

As a second measure for reducing the influence of environmental light, an aperture may be provided in one or both of the transparent elements 14a, 14b in order to limit the light entering into them. Such apertures may e.g. be located between the mirror surface 30, 42 and the first transparent surface 28a, 41a and e.g. have smaller cross section area than one or both of mirror surface 30, 42 and first transparent surface 28a, 41a.

In the embodiment of Figs. 1 - 3, one such aperture is formed by a constriction 52 in the surface of the transparent element 14a, 14b, i.e. a region where recesses are formed in the surface of transparent element 14a, 14b.

A third measure for reducing the influence of environmental light is described in the next section.

*Using TIR for Suppressing Environmental Light*

The third measure optimizes the geometry of one or both transparent elements 14a, 14b to suppress the direct passage of environmental light.

Depending on the geometry of the transparent elements, there is a risk that environmental light may enter through measuring slit 26, be refracted at first transparent surface 28a, 41a, pass through transparent element 14a, 14b, exit through second transparent surface 28b, 41b, and thus arrive at one of the light detectors 25, 24.

It must be noted, though, that the refractive index $n_1$ of transparent element 14a, 14b is typically higher than the refractive index $n_2$ outside first transparent surface 28a, 41a (i.e. in measuring slit 26) and than the refractive index $n_3$ outside second transparent surface 28b, 41b (i.e. between second transparent surface 28b, 41b and light detector 24, 25).

Typically (unless measuring slit 26 is filled by a fluid other than air), refractive index $n_2$ equals 1. Refractive index $n_3$ is also 1 as long as there is an air gap 54 between second surface 28b, 41b and light detector 24, 25. On the other hand, refractive index $n_1$ of transparent element 14a, 14b is at least 1.3, in particular at least 1.4.

This limits the angles of environmental light entering into transparent element 14a, 14b through first transparent surface 28a, 41a. It also limits the light directions that are able to couple out through second surface 28b, 41b.

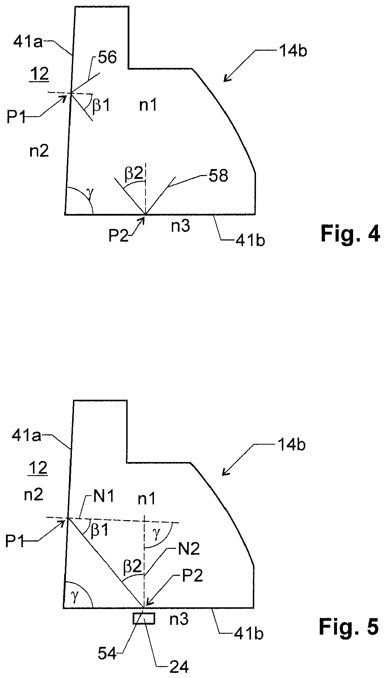

This is illustrated for second transparent element 14b and primary light detector 24 in Figs. 4 and 5, but the same considerations apply to first transparent element 14a and secondary light detector 25.

Fig. 4 illustrates how light can enter into transparent element 14b at any given point P1 of first transparent surface 41a. Notwithstanding the direction of the light in measurement slit 12, the beam refracted into transparent element 14b will always be within a cone 56 if $n_2 < n_1$.

The angle $\beta 1$ of the aperture of cone 56 is given by

$$\beta 1 = \arcsin\left({n_2}/{n_1}\right) \tag{1}$$

Light trying to leave transparent element 14b at any point P2 of second transparent surface 41b may be subject to total internal reflection (TIR) if $n_3 < n_1$. This will happen to any light traveling outside of a cone 58.

The angle $\beta 2$ of the aperture of cone 58 is given by

$$\beta 2 = \arcsin\left({n_3}/{n_1}\right) \tag{2}$$

Hence, if the angles $\beta 1$ and $\beta 2$ are sufficiently small in comparison to angle $\gamma$, it is possible to prevent any light entering through first transparent surface 41a from directly (i.e. without being reflected or deflected) exiting through second transparent surface 41b.

This is illustrated in Fig. 5, which shows a transparent element 14b where this effect is just about achieved.

Here, it is assumed that an environmental light beam entering transparent element 14 at point P1 lies at the border of cone 56, i.e. it has an angle $\beta 1$ in respect to the surface normal N1 of first transparent surface 41a.

Further, it is assumed that the thus refracted light beam transverses transparent element 14b to arrive at a point P2 in second transparent surface 41b where it would-if it were able to exit-arrive at light detector 24.

Further, it is assumed that this light beam lies at the border of cone 58, i.e. it has an angle $\beta 2$ in respect to the surface normal N2 of second transparent surface 41b at point P2. In other words, $\beta 1$ and $\beta 2$ are as in Eqs. (1) and (2).

If we redefine $\beta 1$ and $\beta 2$ to be the angles between the connecting line P1-P2 and the surface normal N1 and N2, respectively, refraction at first transparent surface 41a and total internal reflection at second transparent surface 41b will collaborate to prevent the direct transmission of light to detector 24 if at least one of the following two conditions is met:

$$\beta 1 > \arcsin\left(\frac{n_2}{n_1}\right) \text{ and/or} \qquad (3a)$$

$$\beta 2 > \arcsin\left(\frac{n_3}{n_1}\right) \qquad (3b)$$

In order to totally block the direct transmission of light to the light detector, at least one of these conditions should be met for any straight line extending all through said transparent element 14a, 14b (i.e. without hitting anything that would block or deflect light along it) between any first point P1 on the first transparent surface 28a, 41a and any second point P2 on said second transparent surface 28b, 41b. In this context, the "second transparent surface" designates all those points from where light might reach the adjacent light detector 25, 24.

If we assume that $\gamma$ is the angle between the tangential planes to the transparent surfaces 41a, 41b, it follows for the situation of Fig. 5, from Eqs. (1) and (2):

$$\gamma = \arcsin\left(\frac{n_2}{n_1}\right) + arcsin\left(\frac{n_3}{n_1}\right) \qquad (4)$$

Hence, conditions (3a) and (3b) are met if

$$\gamma > \arcsin\left(\frac{n_2}{n_1}\right) + arcsin\left(\frac{n_3}{n_1}\right) \qquad (5)$$

If the first and second transparent surfaces 41a, 41b are flat, $\gamma$ is the angle between them, cf. Fig. 5

If, for example, slit 12 as well as gap 54 are filled with air, i.e. $n_2 = n_3 = 1$, and we assume $n_2 = 1.5$, $\beta 1$ and/or $\beta 2$ should be at least 41.8°. Or, in the view of condition (5), $\gamma$ should be at least 83.6°.

In the example shown in Fig. 2, $\gamma$ is 90° for most pairs of points PI, P2.

For this case, i.e. if the first and second transparent surfaces are perpendicular to each other, and $n_2 = n_3 = 1$, the refractive index $n_1$ of the transparent element 14a, 14b should be larger than 1.41 in order to fulfil the conditions (3a), (3b), or (5).

*Notes*

In the examples above, elongate object 10 is a yarn. It must be noted, though, that it may also be another object, such as a yarn precursor, a wire, a ply yarn, or a fiber.

Elongate object 10 is advantageously moving through measuring region 12 in a direction corresponding to its longitudinal axis 11.

While there are shown and described presently preferred embodiments of the invention, it is to be distinctly understood that the invention is not limited thereto but may be otherwise variously embodied and practiced within the scope of the following claims.

**Claims**

1. A sensor for measuring at least one property of an elongate body, in particular an elongate textile body, comprising a measurement slit (26) and a measuring region (12) arranged in said slit (26),
   a light source (22) generating a light field in said measuring region (12),
   at least one light detector (24, 25),
   at least one transparent element (14a, 14b) having a

   a) first transparent surface (28a, 41a) bordering said slit (26) and forming at least part of a lateral wall (27a, 27b) of said slit (26), wherein said light field transverses said first transparent surface (28a, 41a),
   b) a second transparent surface (28b, 41b) facing said light detector (25, 24), wherein said light detector (25, 24) is positioned to receive light through said second transparent surface (28b, 41b),

wherein said first transparent surface (28a, 41a) extends transversally to said second transparent surface (28b, 41b).

2. The sensor of claim 1 wherein for any straight line extending through said transparent element (14a, 14b) between a first point (PI) on said first transparent surface (28a, 41a) and a second point (P2) on said second transparent surface (28b, 41b),

$$\beta 1 > \arcsin\left(\frac{n_2}{n_1}\right)$$

and/or

$$\beta 2 > \arcsin\left(\frac{n_3}{n_1}\right)$$

with

$\beta 1$ being an angle between said line and a surface normal (N1) at said first point (P1),
$\beta 2$ being an angle between said line and a surface normal (N2) at said second point (P2),
$n_1$ begin a refractive index of said transparent element (14a, 14b),
$n_2$ being a refractive index in said measuring region (12),
$n_3$ being a refractive index on a side of said second surface (28b, 41b) that faces said light detector (25, 24).

3. The sensor of any of the preceding claims wherein for any straight line extending through said transparent element (14a, 14b) between a first point (P1) on said first transparent surface (28a, 41a) and a second point (P2) on said second transparent surface (28b, 41b),

$$\gamma > \arcsin\left(\frac{n_2}{n_1}\right) + arcsin\left(\frac{n_3}{n_1}\right)$$

with

$\gamma$ being an angle between the tangential planes to the transparent surfaces (41a, 41b) at said first and said second points (P1, P2)
$n_1$ begin a refractive index of said transparent element (14a, 14b),
$n_2$ being a refractive index in said measuring region (12),
$n_3$ being a refractive index on a side of said second surface (28b, 41b) that faces said light detector (25, 24).

4. The sensor of any of the preceding claims wherein said first and said second transparent surfaces (28a, 28b; 41a, 41b) are perpendicular to each other and a refractive index of said transparent element (14a, 14b) is at least 1.41.

5. The sensor of any of the preceding claims, wherein an air gap (54) is located between said second transparent surface (28b, 41b) and said light detector (25, 24).

6. The sensor of any of the preceding claims wherein the light from said light source (22) transverses said first transparent surface (28a, 41a) along a direction that is within +/- 10° perpendicular to said first transparent surface (28a, 41a).

7. The sensor of any of the preceding claims wherein said transparent element (14a, 14b) further comprises a mirror surface (30, 42) extending transversally to said first and second surfaces.

8. The sensor of claim 7 wherein said light source (22) and said mirror surface (30, 42) are positioned such that light from said light source (22) is reflected by said mirror surface (30), transverses said first transparent surface (28a) and generates said light field in said measurement region (12),
and in particular wherein said light source (22) is positioned to send light through said second transparent surface (28b) onto said mirror surface (42).

9. The sensor of any of the claims 7 or 8 wherein said light detector (25) is positioned to receive part of the light from said light source (22) reflected from said transparent element (14a).

10. The sensor of any of the claims 7 to 9 wherein said measuring region (12) and said mirror surface (42) are positioned such that light from said light field enters said transparent element (14b) through said first transparent surface (41a) and is reflected by said mirror surface (42) onto said light detector (24).

11. The sensor of any of the claims 7 to 10 wherein said transparent element (14a, 14b) comprises an aperture between said mirror surface (30, 42) and said first surface (28a, 41a), and in particular wherein said aperture is formed by a constriction (52) of said transparent element (14a, 14b).

12. The sensor of any of the preceding claims wherein
said measurement slit (26) has a first lateral wall (27a), a second lateral wall (27b), and a bottom wall (27c) between said first and second walls, wherein said walls enclose said measurement slit (26) from three sides, and
said measurement slit (26) is open at first, second, and third sides (27d, 27e, 27f), wherein said first and said second sides (27d, 27e) extend transversally to said walls (27a - 27c) and are opposite to each other and said third side (27f) is opposite to said bottom wall (27c),
wherein said first transparent side (28a, 41a) forms at least part of said first and/or said second wall (27a, 27b).

13. The sensor of any of the preceding claims comprising a first and a second transparent element (14a, 14b) and a primary (24) and a secondary (25) light detector, wherein the secondary light detector (25) is arranged at the second transparent surface (28b) of the first transparent element (14a) and the primary light detector (24) is arranged at the second transparent surface (41b) of the second transparent element (14b),
and in particular wherein the light source (22) is arranged at the second transparent surface (28b) of the first transparent element (14a).

14. The sensor of claim 13
wherein said first and said second transparent elements (14a, 14b) are integrally connected to each other to form a transparent body (14), and/or
wherein said measuring region (12) is located between the first transparent surface (28a) of said first transparent element (14a) and the first transparent surface (41a) of said second transparent element (14b), and/or
wherein, at least at the measuring region (12), the first transparent surface (28a) of said first transparent element (14a) is parallel, in particular within +/-10°, to the first transparent surface (41a) of said second transparent element (14b), and/or
wherein the second transparent surface (28b) of said first transparent element (14a) is parallel, in particular within +/- 10°, to the second transparent surface (41b) of said second transparent element (14b).

15. The sensor of any of the preceding claims wherein said light detector (24, 25) and said light source (22) are both mounted to a common carrier plate (16) and/or wherein said transparent element (14a, 14b) comprises an absorbing and/or non-transmitting surface coating (50).

16. Use of the sensor of any of the preceding claims for measuring a diameter and/or contaminations of said elongate body.

Fig. 1

Fig. 2

Fig. 3

**Fig. 4**

**Fig. 5**

Europäisches
Patentamt

European
Patent Office

Office européen
des brevets

## EUROPEAN SEARCH REPORT

Application Number

EP 19 17 8684

### DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2 699 701 A (STROTHER FRED P ET AL) 18 January 1955 (1955-01-18) * columns 1-2; claims 1,2; figures 1,2 * ----- | 1-16 | INV. G01B11/10 D01H13/32 B65H63/06 |
| X | CH 698 639 A2 (RIETER INGOLSTADT GMBH [DE]) 15 September 2009 (2009-09-15) * paragraphs [0001] - [0020] * * paragraphs [0032] - [0049]; figures 1-6 * ----- | 1,15,16 | G01N21/89 G01N21/952 G01N33/36  ADD. G01B11/24 |
| X | EP 1 643 246 A1 (BARCO NV [BE]) 5 April 2006 (2006-04-05) * paragraphs [0001] - [0004]; figure 1 * * paragraphs [0050] - [0070]; figures 2-7 * ----- | 1,15,16 | |
| X | CH 701 772 A1 (USTER TECHNOLOGIES AG [CH]) 15 March 2011 (2011-03-15) * paragraphs [0001] - [0003]; figures 1-4 * * paragraphs [0029], [0030]; figure 5 * ----- | 1,15,16 | |
| X | US 4 716 942 A (JENSEN BORGE R [BE] ET AL) 5 January 1988 (1988-01-05) * abstract * ----- | 1 | TECHNICAL FIELDS SEARCHED      (IPC) G01B G01N D01H B65H |

The present search report has been drawn up for all claims

| Place of search | Date of completion of the search | Examiner |
|---|---|---|
| Munich | 5 December 2019 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 17 8684

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2019

| Patent document cited in search report | | Publication date | Patent family member(s) | | Publication date |
|---|---|---|---|---|---|
| US 2699701 | A | 18-01-1955 | NONE | | |
| CH 698639 | A2 | 15-09-2009 | CH | 698639 A2 | 15-09-2009 |
| | | | DE | 102008000610 A1 | 17-09-2009 |
| EP 1643246 | A1 | 05-04-2006 | NONE | | |
| CH 701772 | A1 | 15-03-2011 | CH | 701772 A1 | 15-03-2011 |
| | | | CN | 102483381 A | 30-05-2012 |
| | | | EP | 2475978 A1 | 18-07-2012 |
| | | | JP | 5820810 B2 | 24-11-2015 |
| | | | JP | 2013504038 A | 04-02-2013 |
| | | | WO | 2011026249 A1 | 10-03-2011 |
| US 4716942 | A | 05-01-1988 | BE | 903115 A | 26-02-1986 |
| | | | DE | 3663158 D1 | 08-06-1989 |
| | | | EP | 0212727 A1 | 04-03-1987 |
| | | | US | 4716942 A | 05-01-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1808690 A
- US 20060164646 A
- US 20060098201 A
- WO 9313407 A